# EUROPÄISCHE PATENTSCHRIFT

(11) **EP 3 257 346 B1**
(45) Veröffentlichungstag und Bekanntmachung des Hinweises auf die Patenterteilung: **08.01.2020**
(21) Anmeldenummer: 17155170.8
(22) Anmeldetag: 08.02.2017
(51) Int. Cl.: A01B 69/00

(54) **SYSTEM ZUR ERFASSUNG VON BETRIEBSAKTIVITÄTEN ZUMINDEST EINER ZUSATZEINHEIT FÜR EINE LANDWIRTSCHAFTLICHE ARBEITSMASCHINE**
SYSTEM FOR OPERATING ACTIVITIES OF AT LEAST A COMPLEMENTARY DEVICE FOR AN AGRICULTURAL MACHINE
SYSTÈME POUR ACTIVITÉS D'EXPLOITATION D' AU MOINS UN APPAREIL COMPLÉMENTAIRE POUR UNE MACHINE AGRICOLE.

(30) Priorität: 13.06.2016 DE 102016110811
(43) Veröffentlichungstag der Anmeldung: 20.12.2017
(73) Patentinhaber: CLAAS E-Systems GmbH, 49201 Dissen am Teutoburger Wald (DE); 365FarmNet Group KGaA mbh & Co KG, 33428 Harsewinkel (DE)
(72) Erfinder: Kuhlmann, Marcus, 33775 Versmold (DE); Hoff, Dr., Carsten, 33378 Rheda-Wiedenbrück (DE); Warkentin, Heinrich, 33330 Gütersloh (DE); Kowohl, Magnus, 33332 Gütersloh (DE); Mähler, Reinhold, 33330 Gütersloh (DE); Johann to Büren, Gerald, 49080 Osnabrück (DE); Apke, Christoph, 33659 Bielefeld (DE)
(74) Vertreter: Budach, Steffen

(56) Entgegenhaltungen:
- DE-A1- 10 335 112
- DE-U1- 20 221 564

## Beschreibung

Die vorliegende Erfindung betrifft ein System zur Erfassung von Betriebsaktivitäten zumindest einer Zusatzeinheit für eine landwirtschaftliche Arbeitsmaschine gemäß dem Anspruch 1.

Im Rahmen der Bewirtschaftung landwirtschaftlich genutzter Flächen kommen zunehmend rechnergestützte Verwaltungssysteme zur Anwendung, welche dazu eingerichtet sind, im Zuge dieser Bewirtschaftung erforderliche Betriebsabläufe beziehungsweise Betriebsprozesse zu organisieren, aufeinander abzustimmen und zu verwalten. Für eine Optimierung der Abläufe von Betriebsprozessen ist es unter anderem erforderlich, Kenntnis hinsichtlich des jeweiligen aktuellen Standortes sowie der aktuellen Aktivität einer jeden landwirtschaftlichen Arbeitsmaschine sowie eines dieser zugeordneten Zusatzgerätes zu haben, welche im Verlauf der Bewirtschaftung zum Einsatz kommen können. Dabei unterscheiden sich die auf einer zu bewirtschaftenden Fläche zum Einsatz kommenden Arbeitsmaschinen und Zusatzgeräte in Abhängigkeit von der jeweiligen zu erfüllenden Aufgabenstellung, beispielsweise dem Pflügen, Säen, Spritzen, Ernten, Transportieren von Erntegut, um nur eine kleine Auswahl zu nennen. Hierfür werden Positionsdaten und Zustandsdaten der jeweiligen Arbeitsmaschine bereitgestellt. Die Zustandsdaten werden gemeinsam mit den Positionsdaten dem übergeordneten Verwaltungssystem zur Verfügung gestellt, welches diese Daten auswertet. Unter dem allgemeinen Begriff landwirtschaftliche Arbeitsmaschinen werden unter anderem Traktoren sowie selbstfahrende Erntemaschinen, wie Mähdrescher oder Feldhäcksler, verstanden. Der Begriff Zusatzeinheit umfasst Vorsatzgeräte, wie ein Getreideschneidwerk, ein Maispflücker, ein Maisgebiss, an Traktoren front- und heckseitig anbringbare Anbaugeräte sowie gezogene Vorrichtungen wie Ladewagen, Transportwagen, Güllefässer oder dergleichen.

Das Dokument DE 103 35 112 A1 offenbart ein System zur Erfassung von Betriebsaktivitäten wenigstens einer Zusatzeinheit für eine landwirtschaftliche Arbeitsmaschine, wobei das System eine Einrichtung zur Erfassung von Betriebszustandsdaten zumindest der wenigstens einen Zusatzeinheit aufweist, wobei an der Arbeitsmaschine und/oder der wenigstens einen Zusatzeinheit zumindest ein in Intervallen Betriebszustandsdaten aktiv übermittelndes Sendemodul angeordnet ist, dessen gesendete Betriebszustandsdaten von einer als mobiles Datenempfangsgerät ausgeführten Einrichtung zur drahtlosen Erfassung von Betriebszustandsdaten empfangbar und aufzeichenbar sind, wobei das Sendemodul zumindest einen in diesen einen integrierten Sensor umfasst. Aus der DE 102 30 474 A1 ist ein System zur Erfassung und Dokumentation von Betriebsaktivitäten eines Zusatzgerätes für eine Arbeitsmaschine sowie eine Arbeitsmaschine der eingangs genannten Art bekannt. Für die Erfassung kommt eine Betriebsparametererfassungseinrichtung zur Erfassung von Betriebsparametern des Zusatzgerätes zum Einsatz. Mittels an dem Zusatzgerät sowie der Arbeitsmaschine angeordneter Sensoren werden die Betriebsparameter erfasst und an eine Speichereinrichtung der Betriebsparametererfassungseinrichtung übertragen, in welcher diese als Betriebsdokumentationsinformation abgespeichert werden. Betriebsparameter können die Art und die Typenbezeichnung des Zusatzgerätes oder dergleichen mehr sein, aber auch Betriebsstunden oder sonstige sensorisch erfassbare Daten. Zum Auslesen der in der Speichereinrichtung hinterlegten Betriebsdokumentationsinformation ist eine geeignete Leseeinrichtung erforderlich, welche aktiv in Verbindung mit der Speichereinrichtung gebracht werden muss. Eine Voraussetzung für dieses System zur Erfassung ist, dass die Kommunikation zwischen den Sensoren des Zusatzgerätes und der Betriebsparametererfassungseinrichtung der Arbeitsmaschine aufeinander abgestimmt ist, was im Regelfall voraussetzt, dass die Arbeitsmaschine und das Zusatzgerät auf den gleichen Hersteller zurückgehen.

Die der Erfindung zugrunde liegende Aufgabe wird daher darin gesehen, ein System bereitzustellen, die es ermöglichen, herstellerunabhängig Betriebsaktivitäten zumindest einer Zusatzeinheit für eine landwirtschaftliche Arbeitsmaschine zu erfassen, wobei die Implementierung und Nutzung eines solchen Systems beziehungsweise die Ausstattung einer Arbeitsmaschine sowie von Zusatzeinheiten vereinfacht wird.

Diese Aufgabe wird erfindungsgemäß bezüglich des Systems durch die Merkmale des Anspruches 1 gelöst.

Vorteilhafte Weiterbildungen sind Gegenstand der auf den unabhängigen Anspruch jeweils zurückbezogenen Unteransprüche.

Gemäß dem Anspruch 1 wird ein System zur Erfassung von Betriebsaktivitäten zumindest einer Zusatzeinheit für eine Arbeitsmaschine vorgeschlagen, wobei das System eine Einrichtung zur Erfassung von Betriebszustandsdaten zumindest der wenigstens einen Zusatzeinheit aufweist und dadurch gekennzeichnet ist, dass an der Arbeitsmaschine und/oder der wenigstens einen Zusatzeinheit zumindest ein in Intervallen Betriebszustandsdaten aktiv übermittelndes Sendemodul angeordnet ist, dessen gesendete Betriebszustandsdaten von einer als mobiles Datenempfangsgerät ausgeführten Einrichtung zur drahtlosen Erfassung von Betriebszustandsdaten empfangbar und aufzeichenbar sind. Das Sendemodul sendet aktiv Betriebszustandsdaten, welche von dem mobilen Datenempfangsgerät empfangen und aufgezeichnet werden, sobald sich das mobile Datenempfangsgerät im Sendebereich des Sendemoduls befindet. Das mobile Datenempfangsgerät ist als sogenanntes Smartphone oder Tablet-PC ausgeführt, auf welchem eine Anwendung ausführbar ist, mittels der die empfangenen Betriebszustandsdaten händelbar sind. Das mobile Datenempfangsgerät sollte mit einem Positionsortungsempfänger ausgestattet sein. Damit lassen sich Signale eines Positionsortungssystems erfassen, welche den von dem zumindest einen Sendemodul empfangenen Betriebszustandsdaten in einem nachfolgenden Verarbeitungsschritt zugeordnet werden können. Das zumindest eine Sendemodul ist energieautark, so dass es unabhängig vom Betriebszustand der Arbeitsmaschine oder der Zusatzeinheit seine Betriebszustandsdaten sendet. Das Senden der Betriebszustandsdaten nur in Intervallen trägt zur Verlängerung der Sendedauer bei. Ein Wesentlicher Vorteil besteht in der einfachen Nachrüstbarkeit des Sendemoduls an einer Zusatzeinheit, da es unabhängig von herstellerspezifischen Anforderungen an Kommunikationsschnittstellen bei einem Anschluss an die Zusatzeinheit oder die Arbeitsmaschine ist. Die Ausgestaltung als aktives Sendemodul erhöht den Bedienkomfort und die Bediensicherheit, da eine Bedienperson, welche eine Zusatzeinheit mit einer Arbeitsmaschine verbindet, auf dem mobilen Datenempfangsgerät die für einen ordnungsgemäßen Betrieb relevanten Daten der mit der Arbeitsmaschine verbundenen Zusatzeinheit zur Auswahl angezeigt bekommt.

Insbesondere können die von dem Sendemodul übermittelten Betriebsdaten Informationen hinsichtlich der Art sowie der Typenbezeichnung und/oder eine individuelle Kennung der Zusatzeinheit enthalten. Das Sendemodul ist hierzu programmierbar ausgeführt.

Dafür kann das Sendemodul zumindest eine Speichereinheit umfassen. Somit können diese Betriebszustandsdaten in der Speichereinheit des Sendemoduls bei der Erstausrüstung oder einer Nachrüstung hinterlegt werden. Weitere von der Einrichtung zur Erfassung von Betriebszustandsdaten empfangene Daten sind während des Betriebes der Arbeitsmaschine sowie der Zusatzeinheit von dem Sendemodul temporär speicherbar. Dies ist von Bedeutung, wenn ein Datenempfang durch ein mobiles Datenempfangsgerät zeitweise nicht möglich ist, da dieses sich beispielsweise außerhalb der Sendereichweite befindet.

Das Sendemodul ist zur Erfassung von Betriebszustandsdaten eingerichtet. Hierzu können sensorisch erfasste Daten der Arbeitsmaschine und/oder der Zusatzeinheit an das Sendemodul übertragen und in dessen Speichereinheit abgelegt werden. Das Sendemodul sendet diese Daten oder Events wiederholt in Intervallen aus. Um einen Überlauf der Speichereinheit zu vermeiden, kann vorgesehen sein, dass bei erfolgter Verbindungsaufnahme durch das mobile Datenempfangsgerät mit dem Sendemodul, nach erfolgreicher Übertragung der temporär gespeicherten Betriebszustandsdaten ein Signal an das Sendemodul gesandt wird, welches eine teilweise Freigabe der Speichereinheit durch Löschung von sich kontinuierlich verändernden Betriebszustandsdaten bewirkt.

Gemäß der Erfindung ist vorgesehen, dass das Sendemodul zumindest einen in diesen integrierten Sensor zur Bestimmung einer physikalischen Eigenschaft der Arbeitsmaschine oder der Zusatzeinheit umfasst. Dies ermöglicht es, unabhängig von einer der Arbeitsmaschine oder der Zusatzeinheit zugeordneten Sensorik relevante Betriebszustandsdaten zu generieren und zu erfassen. Diese können entsprechend dokumentiert und analysiert werden. Vorteilhafterweise sind in Abhängigkeit von der Art der zu erfassenden physikalischen Eigenschaft sowie der Art der Arbeitsmaschine oder der Zusatzeinheit, an der das Sendemodul angeordnet wird, Schwellwerte und/oder Regeln definierbar. Mittels solcher Schwellwerte und/oder Regeln ist festlegbar, ob ein von dem integrierten Sensor erzeugtes Signal von dem Sensormodul als Datensatz beziehungsweise Event gespeichert und ausgesandt wird. Damit lässt sich vermeiden, dass jede sensorisch erfasste Änderung zu einer Generierung eines zu sendenden Events führt. Die Integration eines Sensors in das Sendemodul ermöglicht eine von einer Sensorik der Arbeitsmaschine unabhängige Generierung von Betriebszustandsdaten.

So kann beispielsweise der zumindest eine in das Sendemodul integrierte Sensor als ein Neigungssensor ausgebildet sein. Mittels des in das Sendermodul integrierten Neigungssensors eröffnen sich weitere Anwendungsmöglichkeiten hinsichtlich der Erfassung von Betriebsaktivitäten der zumindest einen Zusatzeinheit und der Arbeitsmaschine. Beispielsweise lassen sich durch ein solches Sendemodul Ballenpressen älterer Bauart in der Weise nachrüsten, dass ein Ballenzählen möglich wird. Ebenfalls denkbar ist der Einsatz an Güllewagen zur Erfassung von Füllstand und Zeitraum sowie Positionen des Ausbringens von Gülle auf einem Feld. Ebenfalls lassen sich durch dieses Sendemodul Zeitraum und Positionen einer Bodenbearbeitung durch ein an die Arbeitsmaschine angekoppeltes Bodenbearbeitungsgerät bestimmen, indem das Ausheben und Absenken erfasst wird. Ein weiteres Anwendungsbeispiel ist der Einsatz des Sendemoduls mit integriertem Neigungssensor an einem Kipper, mittels dem die Anzahl von durchgeführten Fuhren zählbar ist. An Ladewagen ist die Anordnung des Sensormoduls im Bereich der Zugdeichsel denkbar. Das Ankoppeln beziehungsweise Abkoppeln an einen Traktor oder dergleichen lässt sich durch das Anheben beziehungsweise Absenken der Zugdeichsel erfassen.

Hierbei kann das Sendemodul an einem Bauteil der Zusatzeinheit angeordnet sein, welches während der Betätigung der Zusatzeinheit eine Neigungswinkeländerung erfährt. Bei einer als Bodenbearbeitungsgerät ausgeführten Zusatzeinheit ist eine Anordnung des Sendemoduls mit integriertem Neigungssensor im Bereich der Aufhängung zum Anschluss an einem Dreipunktkraftheber sinnvoll. Alternativ hierzu kann das Sendemodul an den Dreipunktkrafthebern einer als Traktor ausgebildeten Arbeitsmaschine angeordnet sein. Durch den Neigungssensor lässt sich das jeweilige Ausheben und Absenken des Bodenbearbeitungsgerätes erfassen. Ausdehnen lässt sich der Einsatz auch auf selbstfahrende Erntemaschinen wie beispielsweise dem Mähdrescher oder dem Feldhäcksler, wenn das Sendermodul am Schrägförderkanal oder am Einzugskanal angeordnet ist. Die Anordnung des Sendemoduls an einem Kipper kann an der Ladefläche oder der Klappe erfolgen, so dass bei einer Entleerung ein entsprechendes Signal erzeugbar ist, welches repräsentativ für eine Entleerung des Kippers ist. An einem Güllewagen kann ein Sendemodul an dem ein- und ausklappbaren Gestänge zum Einsatz kommen, um erfassen zu können, wann und wo mit dem Ausbringen von Gülle begonnen wurde. Die Zuordnung zu einem Schwimmer im Inneren des Güllewagens ermöglicht parallel eine Füllstandüberwachung.

Weiterhin kann der zumindest eine integrierte Sensor als ein Temperatursensor ausgebildet sein. Ein solcher Sensor kann zur Überwachung der Umgebungstemperatur zum Einsatz kommen. Als Anwendungsbeispiel kann hierfür das Roden von Kartoffeln angeführt werden, welche bei Temperaturen oberhalb von 5°C gerodet werden sollen. Grundsätzlich lässt sich in Kombination mit einem zusätzlichen Feuchtigkeitssensor, der zusätzlich in das Sendemodule mit dem Temperatursensor integriert ist oder als eigenes Sendemodul ausgeführt ist, ein Temperatur- und Feuchtigkeitsprofil während eines Erntevorganges erstellen. Ebenfalls denkbar ist die Verwendung des Sendemoduls mit einem integrierten Feuchtigkeitssensor bei der Ausbringung von Pflanzenschutzmitteln mittels Traktor und Spritze, vor dem Hintergrund, dass bei einer zu hohen Luftfeuchtigkeit das Ausbringen des Pflanzenschutzmittels nicht mehr sinnvoll ist, da die Pflanzen die Wirkstoffe nicht aufnehmen können.

Des Weiteren kann der zumindest eine integrierte Sensor als ein Beschleunigungssensor oder als ein Reedsensor ausgebildet sein.

Vorteilhafterweise kann die drahtlose Datenübermittlung auf dem Bluetooth-Standard basieren. Insbesondere der als Bluetooth Low Energy (BLE) bekannte Funktechnikstandard ist sinnvoll, da dieser sich durch einen geringen Energieverbrauch auszeichnet. Dies ist von Vorteil für die energieautarken Sendemodule, die in der Regel mittels einer Batterie betrieben werden. Da die Gehäuse solcher Sensormodule oftmals nicht zerstörungsfrei geöffnet werden können, um aufgrund des Außeneinsatzes die Betriebssicherheit zu gewährleisten, ist ein Austausch der Batterie nicht möglich. Die Kommunikation mittels BLE gewährleistet, zusammen mit dem Senden in definierbaren Zeitintervallen, eine hohe Einsatzdauer des Sensormoduls.

Insbesondere können von dem mobilen Datenempfangsgerät empfangene Betriebszustandsdaten zu ihrer Auswertung an eine zentrale Datenverarbeitungseinrichtung übermittelbar sein. Hierzu können die von dem Sendemodul oder den Sendemodulen empfangenen Betriebszustandsdaten beispielsweise mittels des Mobilfunkstandard GSM von dem mobilen Datenempfangsgerät an die zentrale Datenverarbeitungseinrichtung übertragen werden, welche die jeweiligen empfangenen Betriebszustandsdaten interpretiert und aggregiert, so dass eine Dokumentation und ein Reporting der Aktivitäten der Arbeitsmaschine sowie der Zusatzeinheit möglich ist. Besonders vorteilhaft ist die Kombination der empfangbaren Betriebszustandsdaten, die einerseits von an der Arbeitsmaschine bereits befindlichen Sensoren erfasst werden und andererseits zusätzlich von den Sendemodulen der Zusatzeinheiten bereitgestellt werden, um eine umfassende Auswertung und Dokumentation aller Betriebsaktivitäten zu ermöglichen. Gemäß dem Anspruch 12 wird das System gemäß dem Anspruch 1 vorgeschlagen, wobei das System eine landwirtschaftliche Arbeitsmaschine mit wenigstens einer mit dieser verbindbaren Zusatzarbeitseinheit, - sowie eine Einrichtung zur Erfassung von Betriebszustandsdaten, umfasst. Ein Wesentlicher Vorteil ist darin zu sehen, dass die Arbeitsmaschine sowie die Zusatzeinheit auf einfachste Weise kostengünstig nachrüstbar sind, um eine Erfassung ihrer Betriebsaktivitäten zu ermöglichen.

Dabei kann die Arbeitsmaschine als Traktor ausgebildet sein und die wenigstens eine Zusatzeinheit als Anbaugerät, wie ein Bodenbearbeitungsgerät oder eine Feldspritze, als eine gezogene Einheit, beispielsweise eine Ballenpresse, ein Ladewagen, ein Kipper, ein Güllewagen oder dergleichen.

Insbesondere kann die Arbeitsmaschine als selbstfahrende Erntemaschine ausgebildet sein und die wenigstens eine Zusatzeinheit als ein daran anschließbares Vorsatzgerät oder ein Arbeitsaggregat der Arbeitsmaschine.

Die vorliegende Erfindung wird nachstehend anhand von in den Zeichnungen dargestellten Ausführungsbeispielen näher erläutert.

Es zeigen:
Fig. 1 eine schematische Darstellung eine Systems zur Erfassung von Betriebsaktivitäten zumindest einer Zusatzeinheit für eine landwirtschaftliche Arbeitsmaschine;
Fig. 2 eine schematische Darstellung einer Arbeitsmaschine und einer Zusatzeinheit;
Fig. 3 eine schematisierte Darstellung eines Sendemoduls und eines mobilen Datenempfangsgerätes.

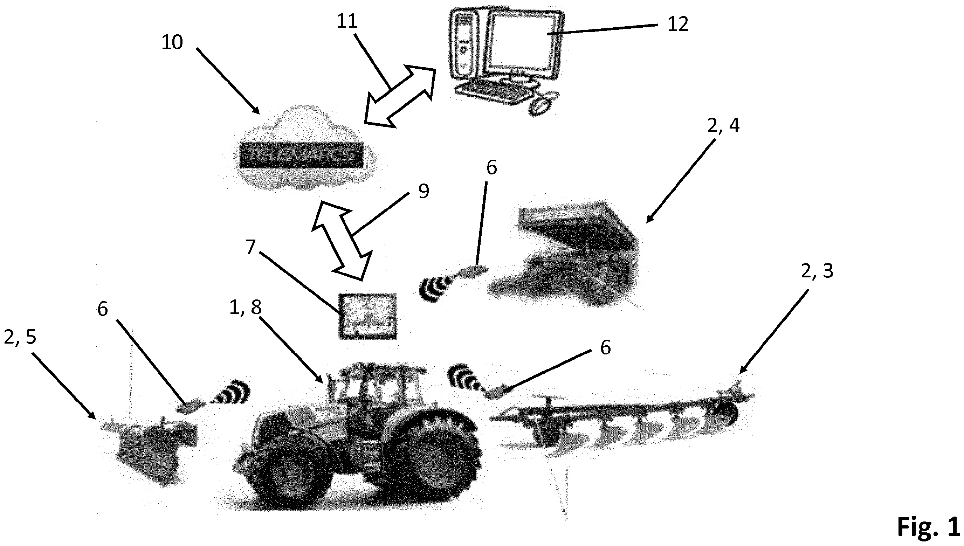

In Fig. 1 ist eine schematische Darstellung eines Systems zur Erfassung von Betriebsaktivitäten zumindest einer Zusatzeinheit 2 für eine landwirtschaftliche Arbeitsmaschine 1 gezeigt. In dem dargestellten Ausführungsbeispiel handelt es sich bei der Arbeitsmaschine 1 um einen Traktor 8, an dem beispielsweise eine als Räumschild 5 oder Frontlader ausgeführte Zusatzeinheit 2 frontseitig anschließbar ist. Als weitere Beispiele für eine Zusatzeinheit 2 sind ein Bodenbearbeitungsgerät 3 sowie ein Kipper 4 gezeigt. Das Bodenbearbeitungsgerät 3 ist am rückwärtigen Dreipunktkraftheber des Traktors 8 angeordnet. Der Kipper 4 wird mit seiner Zugdeichsel an einer Anhängerkupplung des Traktors 8 angehängt. Wie in der Darstellung in Fig. 1 angedeutet, weist jede Zusatzeinheit 2 ein Sendemodul 6 auf. Das Sendemodul 6 ist zur aktiven Übertragung von Betriebszustandsdaten der Zusatzeinheit 2 eingerichtet. Hierzu kommuniziert das Sensormodul 6 drahtlos mittels einer auf dem Bluetooth-Standard basierenden Funktechnik, vorzugsweise gemäß Bluetooth Low Energy (BLE). Weiterhin zeigt die Darstellung ein mobiles Datenempfangsgerät 7. Das mobile Datenempfangsgerät 7 ist als ein Smartphone oder Tablet-PC ausgeführt und wird im Allgemeinen von einer Bedienperson mitgeführt, welche die Arbeitsmaschine 1 und die damit verbundene Zusatzeinheit 2 bedient. Das mobile Datenempfangsgerät 7 ist zur drahtlosen Kommunikation mit dem Sendemodul 6 eingerichtet.

Das mobile Datenempfangsgerät 7 sendet die von dem Sendemodul 6 empfangenen Betriebszustandsdaten mittels einer geeigneten Kommunikationsinfrastruktur 9 an eine zentrale Datenverarbeitungseinrichtung 10 zur Interpretation und Aggregation für eine spätere Dokumentation und Reporting. Dies kann beispielsweise auf dem Mobilfunkstandard GSM basierend erfolgen. Alternative Kommunikationsprotokolle zur drahtlosen Datenübertragung sind denkbar. Wie weiterhin angedeutet, sind die von der zentralen Datenverarbeitungseinrichtung 10 für die Arbeitsmaschine 1 und die Zusatzeinheit 2 aufbereiteten Betriebszustandsdaten beispielsweise via Internet 11 von einem Hofrechner 12 auf einer Hofstelle oder dergleichen, zu welcher die Arbeitsmaschine 1 und die Zusatzeinheit 2 gehören, abrufbar.

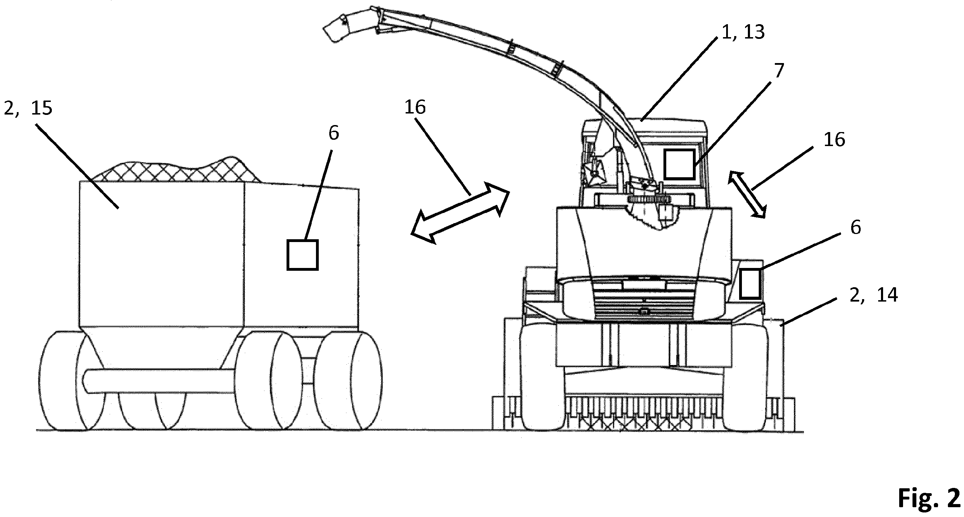

In Fig. 2 ist eine schematische Darstellung einer als selbstfahrende Erntemaschine 13 ausgebildeten Arbeitsmaschine 1, einer als Pick-up 14 ausgebildeten Zusatzeinheit 2 sowie einer als Ladewagen 15 ausgeführten Zusatzeinheit 2 gezeigt. Die Zusatzeinheiten 2, das heißt der Ladewagen 15 sowie die Pick-up 14 sind jeweils mit einem Sendemodul 6 ausgestattet. Das mobile Datenempfangsgerät 7 befindet sich in der Kabine des Feldhäckslers 13. Wie in der Darstellung angedeutet, kommunizieren die Sendemodule 6 mit dem Datenempfangsgerät 7 mittels der Funktechnik BLE 16 miteinander.

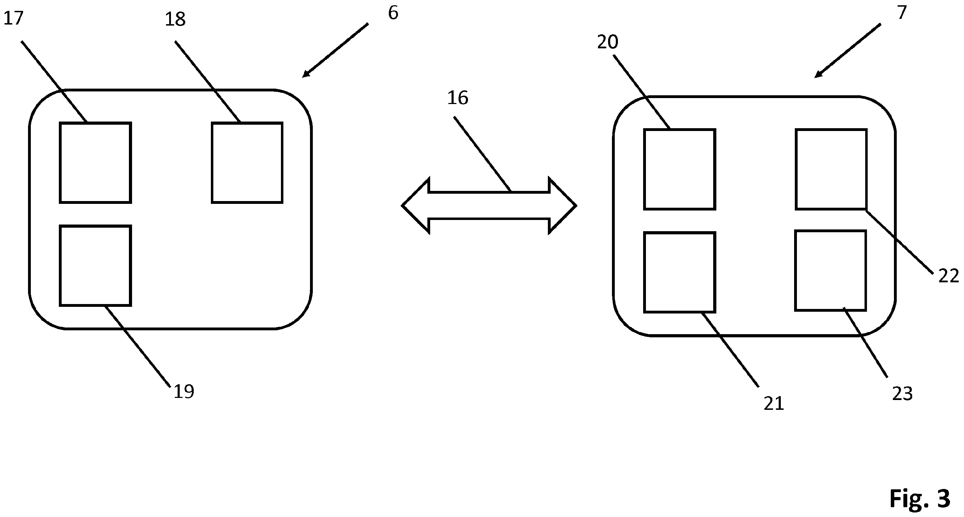

Die Abbildung gemäß der Fig. 3 zeigt eine schematisierte Darstellung des Sendemoduls 6 und des mobilen Datenempfangsgerätes 7. Das Sendemodul 6 umfasst eine auf der Funktechnik BLE basierende Sendeeinheit 17 und zumindest eine Speichereinheit 18. Wenigstens ist ein Sensor 19 in das Sendemodul 6 integriert. Das Datenempfangsgerät 7 umfasst eine auf der Funktechnik BLE basierende Sender-Empfängereinheit 20, eine Mobilfunkeinheit 21, eine Empfangseinheit für Positionsortungssignale 22 sowie eine Speichereinrichtung 23.

Nachstehend wird das Zusammenspiel von Arbeitsmaschine 1 und Zusatzeinheit 2 beziehungsweise Datenempfangsgerät 7 und Sendemodul 6 zunächst anhand des in Fig. 2 gezeigten Ausführungsbeispieles erläutert.

In der Speichereinheit 18 des dem Ladewagen 15 zugeordneten Sendemoduls 6 sind im einfachsten Fall Betriebszustandsdaten gespeichert, welche eine eindeutige Identifizierung des Ladewagens 15 als solches sowie spezifische Daten wie eine Identifizierungsnummer und weitere technische Spezifikationen umfassen. Das Sendemodul 6 sendet diese Betriebszustandsdaten kontinuierlich in Intervallen aus. Gelangt das Datenempfangsgerät 7 auf dem Feldhäcksler 13 in die Reichweite des Sendemoduls 6 an dem Ladewagen 15, so nimmt das Datenempfangsgerät 7 diese auf, versieht die Betriebszustandsdaten mit einem Zeitstempel und verknüpft diese Betriebszustandsdaten mit der jeweiligen Position des Feldhäckslers 13, die mittels der Empfangseinheit für Positionsortungssignale 22 bestimmbar ist. Diese Daten werden daraufhin durch die eine Mobilfunkeinheit 21 an die zentrale Datenverarbeitungseinrichtung 10 übertragen. Auf diese Weise lässt sich erfassen, dass sich ein bestimmter Ladewagen 15 zur Beladung mit Erntegut bei dem Feldhäcksler 13 aufhält. Oftmals fahren zwei Ladewagen 15 parallel zueinander neben dem Feldhäcksler 13 her, damit der Ernte- und Beladevorgang möglichst unterbrechungsfrei, das heißt ohne Stillstandzeit des Feldhäckslers 13, erfolgen kann. Die Sendemodule 6 des jeweiligen Ladewagens 15 ermöglichen eine Differenzierung zwischen den Ladewagen 15 auch hinsichtlich ihres jeweiligen Abstandes zu dem Feldhäcksler 15 beziehungsweise dem mobilen Datenempfangsgerät 7 auf diesem.

In gleicher Weise erfolgen die Kommunikation und der Transfer von Betriebszustandsdaten zwischen dem Feldhäcksler 13 und der daran angeordneten Pick-up 14 sowie dem Feldhäcksler 13 und der zentralen Datenverarbeitungseinrichtung 10. Die Speichereinheit 18 des Sendemoduls 6 an der Pick-up 14 enthält gleichfalls Betriebszustandsdaten, die von der Sendeeinheit 6 an der Pick-up 14 wiederholt ausgesandt werden.

Selbstfahrende Erntemaschinen, wie der Feldhäcksler 13 oder Mähdrescher verfügen über diverse Sensoren, welche die Arbeitsaggregate überwachen, um während des Betriebes relevante Betriebszustandsdaten bereitzustellen. Diese von dem Feldhäcksler 13 selbst bereitgestellten Daten lassen sich ergänzend nutzen, um den Informationsgehalt der von den Sendemodulen der Zusatzeinheiten 2 bereitgestellten Daten zu erhöhen. So können von einer Steuerungseinrichtung des Feldhäcksler 13 Betriebszustandsdaten wie die individuelle Bezeichnung, der Schlag auf dem geerntet wird, aber auch Informationen über den Trockensubstanzgehalt des Erntegutes und die auf den Ladewagen 15 überladene Erntegutmenge an das Datenempfangsgerät 7 übertragen werden.

Diese werden zusammen mit den von den Sendemodulen 6 empfangenen Betriebszustandsdaten an zentrale Datenverarbeitungseinrichtung 10 gesandt.

Der Ladewagen 15 wird nach dessen Befüllung vom Schlag abtransportiert und zur Bestimmung der Masse des geladenen Erntegutes gewogen und protokolliert. Um diesen Vorgang zu automatisieren, kann vorgesehen sein, dass an der Wiegestation ebenfalls ein mobiles Datenempfangsgerät vorgesehen ist, welches die Betriebszustandsdaten des Ladewagens 15 ausliest. Ein aufgrund des Wiegens des Ladewagens 15 erstelltes Wiegeprotokoll wird gemeinsam mit den empfangenen Betriebszustandsdaten des Ladewagens 15 und einem Zeitstempel von dem mobilen Datenempfangsgerät der Wiegestation an die zentrale Datenverarbeitungseinrichtung 10 versendet.

Mit den der zentralen Datenverarbeitungseinrichtung 10 für den Beladevorgang, das Wiegen und das anschließende Entladen des Ladewagens 15 bereitgestellten Betriebszustandsdaten lassen sich für eine spätere Abrechnung relevante Details dokumentieren, wie die Bezeichnung des Feldhäckslers 13, der Schlag, auf welchem geerntet wurde, Beginn und Ende der Beladung, die Bezeichnung des Ladewagens 15, Transportdauer, Beginn und Ende der Entladung.

Da die Ladewagen im Allgemeinen von einem Traktor als Arbeitsmaschine gezogen werden, befindet sich auch auf dem Traktor eine Bedienperson mit einem mobilen Datenempfangsgerät 7, welches entsprechende Betriebszustandsinformationen von dem Feldhäcksler 13 und der daran befindlichen Pick-up 14 empfangen kann.

In analoger Weise ist diese vorstehend anhand des Feldhäckslers 13 beschriebene Vorgehensweise auf eine als Mähdrescher ausgeführte Arbeitsmaschine 1 übertragbar, um den Betriebsablauf während der Ernte zu erfassen und zu dokumentieren.

Bezugnehmend auf die Darstellung in Fig. 1 ergibt sich der gleiche Anwendungsfall, bei welchem die Arbeitsmaschine 1, der Traktor 8, mit einer Zusatzeinheit 2 verbunden wird. Die jeweilige Zusatzeinheit 2 ist mit einem Sendemodul 6 ausgestattet, welches aktiv in Intervallen Betriebszustandsdaten aussendet. Die Verwendung zumindest eines in das Sendemodul 6 integrierten Sensors 19, der zur Bestimmung einer physikalischen Eigenschaft der Arbeitsmaschine 1 oder der Zusatzeinheit 2 eingerichtet ist, ermöglicht es, über die reine Identifikation der Zusatzeinheit 2 hinausgehende Betriebszustandsdaten zu generieren. Dies kann insbesondere unabhängig von einer auf der Arbeitsmaschine 1 vorhandenen Sensorik erfolgen.

Beispielhaft sei die Ausführung des Sensors 19 als Neigungssensor genannt. Ein solcher als Neigungssensor ausgebildeter Sensor 19 ermöglicht es, zusätzliche Betriebszustandsdaten der jeweiligen Zusatzeinheit 2 zu erfassen. Dies ist unter anderem für Zusatzeinheiten 2 relevant, die beispielsweise aufgrund ihres Alters nicht über geeignete Sensoren zur Erfassung von Betriebszustandsdaten verfügen. Hierzu ist das Sendemodul 6 an einem Bauteil der Zusatzeinheit 2 angeordnet, welches während der Betätigung der Zusatzeinheit 2 eine Neigungswinkeländerung erfährt.

An einem Güllewagen kann das Sendemodul 6 an einem Schwimmer angeordnet sein, so dass sich der Füllstand protokollieren lässt. Darüber hinaus kann ein weiteres Sendemodul 6 am Gestänge des Güllewagens angeordnet sein, so dass das Ein- und Ausklappen durch das Sendemodul 6 erfassbar ist. Die kombinierte Verwendung dieser beiden Sendemodule 6 am Güllewagen lässt eine Protokollierung der Nutzungsdauer sowie der jeweils ausgebrachten Güllemenge zu. Die von dem Neigungssensor erfassten Signale werden an das Sendemodul 19 gesandt, welche dieses in seiner Speichereinheit 18 temporär hinterlegt.

Damit nicht jede Auslenkung des Bauteils der Zusatzeinheit 2, beispielsweise des Gestänges des Güllewagens, zu einer Abspeicherung eines Datensatzes in der Speichereinheit 18 führt, sind Regeln und/oder Schwellwerte hinterlegbar. Mittels solcher Schwellwerte und/oder Regeln ist festlegbar, ob ein von dem integrierten Sensor erzeugtes Signal von dem Sensormodul als Datensatz beziehungsweise Event gespeichert und ausgesandt wird.

Da die Kapazität der Speichereinheit 18 des Sendemoduls 6 begrenzt ist, ist vorgesehen, dass für die Dauer, während derer die erfassten Betriebszustandsdaten nicht abgerufen werden können, weil ein Datenempfangsgerät 7 nicht in Reichweite ist, diese temporär abgespeichert werden. Gelangt ein Datenempfangsgerät 7 in die Sendereichweite des Sendemoduls 6 und werden die in der Speichereinheit 18 gepufferten Betriebszustandsdaten erfolgreich übertragen, so werden die sich kontinuierlich verändernden Betriebszustandsdaten aus der Speichereinheit 18 gelöscht. Um zu gewährleisten, dass eine Übertragung der Betriebszustandsdaten erfolgreich war, sendet die Sender-Empfängereinheit 20 des mobilen Datenempfangsgerätes 7 ein entsprechendes Bestätigungssignal an das Sendemodul 6. Dies kann automatisch ausgeführt werden oder der Bestätigung der Bedienperson bedürfen, wenn die Betriebszustandsdaten der Zusatzeinheit 2 nicht abgerufen werden sollen.

Einen weiteren Anwendungsfall stellt die Anordnung des Sendemoduls 6 mit integriertem Sensor 19 an der Ladefläche oder der Klappe des Kippers 4 dar. Bei einer Entleerung ist ein entsprechendes Signal durch den Sensor 19 erfassbar, welches repräsentativ für eine Entleerung des Kippers 4 ist. Auf diese Weise lässt sich die Anzahl an Fuhren ermitteln.

In gleicher Weise kann das Sendemodul 6 mit dem integrierten Sensor 19 an dem Bodenbearbeitungsgerät 3 Verwendung finden. Das jeweilige Anheben beziehungsweise Absenken mittels des Dreipunktkrafthebers am Traktor 8 lässt Rückschlüsse auf die Nutzungsdauer des Bodenbearbeitungsgerätes 3 zu.

In gleicher Weise lassen sich diese Sendemodule 6 an der Arbeitsmaschine 1 anordnen, um beispielsweise eine Nutzungsdauer einer als Vorsatzgerät einer Erntemaschine ausgeführten Zusatzeinheit 2 zu bestimmen. So lässt sich das Sendemodul 6 am Einzugskanal des Feldhäckslers 13 anordnen, so dass die jeweilige Nutzungsdauer der Pick-up 14 während eines Erntevorganges ermittelbar und protokollierbar ist.

Das jeweilige Sendemodul 6 ist als ein sogenannter Beacon ausgebildet, welcher aufgrund der Verwendung einer Batterie energieautark ist. Der Beacon ist aufgrund seiner geringen Größe und der autarken Ausgestaltung insbesondere für eine Nachrüstung auch älterer Zusatzeinheiten 2 geeignet.

### Bezugszeichenliste

- 1: Arbeitsmaschine
- 2: Zusatzeinheit
- 3: Bodenbearbeitungsgerät
- 4: Kipper
- 5: Räumschild
- 6: Sendemodul
- 7: Datenempfangsgerät
- 8: Traktor
- 9: Kommunikationsinfrastruktur
- 10: Zentrale Datenverarbeitungseinrichtung
- 11: Internet
- 12: Hofrechner
- 13: Feldhäcksler
- 14: Pick-up
- 15: Ladewagen
- 16: Funktechnik BLE
- 17: Sendeeinheit
- 18: Speichereinheit
- 19: Sensor
- 20: Sender-Empfängereinheit
- 21: Mobilfunkeinheit
- 22: Empfangseinheit
- 23: Speichereinrichtung

## Patentansprüche

1. System zur Erfassung von Betriebsaktivitäten wenigstens einer Zusatzeinheit (2) für eine landwirtschaftliche Arbeitsmaschine (1), wobei das System eine Einrichtung zur Erfassung von Betriebszustandsdaten zumindest der wenigstens einen Zusatzeinheit (2) aufweist, wobei an der Arbeitsmaschine (1) und/oder der wenigstens einen Zusatzeinheit (2) zumindest ein in Intervallen Betriebszustandsdaten aktiv übermittelndes Sendemodul (6) angeordnet ist, dessen gesendete Betriebszustandsdaten von einer als mobiles Datenempfangsgerät (7) ausgeführten Einrichtung zur drahtlosen Erfassung von Betriebszustandsdaten empfangbar und aufzeichenbar sind, wobei das Sendemodul (6) als ein eine Batterie umfassender Beacon ausgebildet ist und das Sendemodul (6) zumindest einen in diesen integrierten Sensor (19) zur Bestimmung einer physikalischen Eigenschaft der Arbeitsmaschine (1) oder der Zusatzeinheit (2) umfasst.

2. System nach Anspruch 1, wobei die von dem Sendemodul (6) übermittelten Betriebsdaten Informationen hinsichtlich der Art und/oder eine individuelle Kennung der Zusatzeinheit (2) enthalten.

3. System nach einem der Ansprüche 1 oder 2, wobei das Sendemodul (6) zumindest eine Speichereinheit (18) umfasst.

4. System nach einem der Ansprüche 1 oder 3, wobei das Sendemodul (6) zur Erfassung von Betriebszustandsdaten einge-

5. System nach Anspruch 1, wobei der zumindest eine integrierte Sensor (19) als ein Neigungssensor ausgebildet ist.

6. System nach Anspruch 5, wobei das Sendemodul (6) an einem Bauteil der Zusatzeinheit (2) angeordnet ist, welches während der Betätigung der Zusatzeinheit (2) eine Neigungswinkeländerung erfährt.

7. System nach Anspruch 1, wobei der zumindest eine integrierte Sensor (19) als ein Temperatursensor ausgebildet ist.

8. System nach Anspruch 1, wobei der zumindest eine integrierte Sensor (19) als ein Beschleunigungssensor oder als Reedsensor ausgebildet ist.

9. System nach einem der Ansprüche 1 bis 8, wobei die drahtlose Datenübermittlung auf dem Bluetooth-Standard basiert.

10. System nach einem der Ansprüche 1 bis 9, wobei von dem mobilen Datenverarbeitungsgerät (7) empfangene Betriebszustandsdaten zu ihrer Auswertung an eine zentrale Datenverarbeitungseinrichtung (10) übermittelbar sind.

11. System nach einem der vorhergehenden Ansprüche, wobei das System eine landwirtschaftliche Arbeitsmaschine (1) mit wenigstens einer mit dieser verbindbaren Zusatzarbeitseinheit (2), - sowie eine Einrichtung zur Erfassung von Betriebszustandsdaten, umfasst.

12. System nach Anspruch 11, wobei die Arbeitsmaschine (1) als Traktor (8) ausgebildet ist und die wenigstens eine Zusatzeinheit (2) als ein Anbaugerät (3, 5) oder als eine gezogene Einheit (4, 15).

13. System nach Anspruch 11, wobei die Arbeitsmaschine (1) als selbstfahrende Erntemaschine (13) ausgebildet ist und die wenigstens eine Zusatzeinheit (2) als ein daran anschließbares Vorsatzgerät (14) oder als ein Arbeitsaggregat der Arbeitsmaschine (1).

## Claims

1. A system for detecting operating activities of at least one ancillary unit (2) for an agricultural working machine (1), wherein the system has a device for detecting operating status data at least of the at least one ancillary unit (2), wherein arranged on the working machine (1) and/or the at least one ancillary unit (2) is at least one transmitting module (6) which actively transmits operating status data at intervals and the transmitted operating status data of which can be received and recorded by a device in the form of a mobile data receiving unit (7) for wirelessly detecting operating status data, wherein the transmitting module (6) is in the form of a beacon including a battery and the transmitting module (6) includes at least one sensor (19) integrated therein for determining a physical property of the working machine (1) or the ancillary unit (2).

2. A system according to claim 1 wherein the operating data transmitted by the transmitting module (6) include information in regard to the type and/or an individual identification of the ancillary unit (2).

3. A system according to one of claims 1 and 2 wherein the transmitting module (6) includes at least one memory unit (18).

4. A system according to one of claims 1 and 3 wherein the transmitting module (6) is adapted to detect operating status data.

5. A system according to claim 1 wherein the at least one integrated sensor (19) is in the form of a tilt sensor.

6. A system according to claim 5 wherein the transmitting module (6) is arranged on a component of the ancillary unit (2), that during actuation of the ancillary unit (2) experiences a change in the angle of inclination.

7. A system according to claim 1 wherein the at least one integrated sensor (19) is in the form of a temperature sensor.

8. A system according to claim 1 wherein the at least one integrated sensor (19) is in the form of an acceleration sensor or a reed sensor.

9. A system according to one of claims 1 to 8 wherein the wireless data transmission is based on the Bluetooth standard.

10. A system according to one of claims 1 to 9 wherein operating status data received by the mobile data processing unit (7) can be transmitted for evaluation thereof to a central data processing apparatus (10).

11. A system according to one of the preceding claims wherein the system includes an agricultural working machine (1) with at least one ancillary working unit (2) which can be connected thereto and a device for detecting operating status data.

12. A system according to claim 11 wherein the working machine (1) is in the form of a tractor (8) and the at least one ancillary unit (2) is in the form of an attachment (3, 5) or a towed unit (4, 15).

13. A system according to claim 11 wherein the working machine (1) is in the form of a self-propelled harvester (13) and the at least one ancillary unit (2) is in the form of a front attachment (14) which can be connected thereto or in the form of a working assembly of the working machine (1).

## Revendications

1. Système de détection d'activités d'exploitation au moins d'une unité supplémentaire (2) pour une machine de travail agricole (1), le système comprenant un équipement de détection de données d'état d'exploitation au moins de la au moins une unité supplémentaire (2), sur la machine de travail (1) et/ou la au moins une unité supplémentaire (2) étant disposé au moins un module émetteur (6) qui, par intervalles, transmet activement des données d'état d'exploitation et dont les données d'état d'exploitation émises peuvent être reçues et enregistrées par un équipement conformé en appareil mobile de réception de données (7) et destiné à détecter sans fil des données d'état d'exploitation, le module émetteur (6) étant conformé en balise comportant une batterie, et le module émetteur (6) comportant au moins capteur (19) intégré à celle-ci pour déterminer une propriété physique de la machine de travail (1) ou de l'unité supplémentaire (2).

2. Système selon la revendication 1, les données d'exploitation transmises par le module émetteur (6) contenant des informations relatives au type et/ou à un code individuel de l'unité supplémentaire (2).

3. Système selon une des revendications 1 ou 2, le module émetteur (6) comprenant au moins une unité de mémoire (18).

4. Système selon une des revendications 1 ou 3, le module émetteur (6) étant agencé pour détecter des données d'état d'exploitation.

5. Système selon la revendication 1, le au moins un capteur intégré (19) étant conformé en capteur d'inclinaison.

6. Système selon la revendication 5, le module émetteur (6) étant disposé sur un composant de l'unité supplémentaire (2) qui, lors de l'actionnement de l'unité supplémentaire (2), subit une variation d'angle d'inclinaison.

7. Système selon la revendication 1, le au moins un capteur intégré (19) étant conformé en capteur de température.

8. Système selon la revendication 1, le au moins un capteur intégré (19) étant conformé en capteur d'accélération ou en capteur Reed.

9. Système selon une des revendications 1 à 8, la transmission de données sans fil étant basée sur la norme Bluetooth.

10. Système selon une des revendications 1 à 9, des données d'état d'exploitation reçues par l'appareil mobile de traitement de données (7) pouvant être transmises pour analyse à un équipement central de traitement de données (10).

11. Système selon une des revendications précédentes, le système comprenant une machine de travail agricole (1) avec au moins une unité de travail supplémentaire (2) apte à être reliée à celle-ci ainsi qu'un équipement de détection de données d'état d'exploitation.

12. Système selon la revendication 11, la machine de travail (1) étant conformé en tracteur (8), et la au moins une unité supplémentaire (2) étant conformée en outil rapporté (3, 5) ou en unité tractée (4, 15).

13. Système selon la revendication 11, la machine de travail (1) étant conformée en machine de récolte automotrice (13), et la au moins une unité supplémentaire (2) étant conformée outil frontal (14) apte à être relié à celle-ci ou en organe de travail de la machine de travail (1).
